# EUROPÄISCHE PATENTSCHRIFT

(11) **EP 3 894 742 B1**
(45) Veröffentlichungstag und Bekanntmachung des Hinweises auf die Patenterteilung: **24.04.2024**
(21) Anmeldenummer: 19808814.8
(22) Anmeldetag: 26.11.2019
(51) Int. Cl.: F21S 41/19, F21S 45/47

(54) **BELEUCHTUNGSVORRICHTUNG FÜR EINEN KRAFTFAHRZEUGSCHEINWERFER**
LIGHTING DEVICE FOR A MOTOR VEHICLE HEADLIGHT
DISPOSITIF D'ÉCLAIRAGE POUR UN PHARE DE VÉHICULE AUTOMOBILE

(30) Priorität: 11.12.2018 EP 18211619
(43) Veröffentlichungstag der Anmeldung: 20.10.2021
(73) Patentinhaber: ZKW Group GmbH, 3250 Wieselburg (AT)
(72) Erfinder: ARTNER, Martin, 3672 Maria Taferl (AT); ROLAND, Johann, 3654 Raxendorf (AT); HAHN, Maximilian, 3250 Wieselburg/Erlauf (AT)
(74) Vertreter: Patentanwaltskanzlei Matschnig & Forsthuber OG
(86) Internationale Anmeldenummer: PCT/EP2019/082578
(87) Internationale Veröffentlichungsnummer: WO 2020/120127

(56) Entgegenhaltungen:
- EP-A1- 2 366 938
- EP-A2- 1 228 925
- WO-A1-2014/138763
- DE-A1-102012 202 933

## Beschreibung

Die Erfindung betrifft eine Beleuchtungsvorrichtung für einen Kraftfahrzeugscheinwerfer, welche Beleuchtungsvorrichtung Folgendes umfasst:
- eine optische Baueinheit, welche zumindest eine Lichtquelle und einen der zumindest einen Lichtquelle zugeordneten Kühlkörper, welcher zumindest drei erste Öffnungen aufweist, umfasst, wobei die optische Baueinheit eingerichtet ist, ein Lichtbild vor den Kraftfahrzeugscheinwerfer abzustrahlen,
- einen Tragerahmen, welcher zumindest drei zweite Öffnungen aufweist, welche den zumindest drei ersten Öffnungen des Kühlkörpers zugeordnet sind, und
- ein Adapter-Bauteil, welches eine der Anzahl der ersten Öffnungen des Kühlkörpers entsprechende Anzahl an zu den ersten Öffnungen korrespondierende Dübelzapfen aufweist, welche Dübelzapfen jeweils eine Gewindebohrung aufweisen und jeweils in einer ersten Öffnung des Kühlkörpers eingeschoben sind,
wobei für jeden Dübelzapfen eine Schraubeinheit mit einem mit der Gewindebohrung korrespondierenden Gegengewinde vorgesehen ist, welche Schraubeinheit über eine zweite Öffnung des Tragerahmens den Tragerahmen durchsetzt und in den jeweiligen Dübelzapfen eingeschraubt ist, wobei die Dübelzapfen eingerichtet sind, sich beim Einschrauben einer Schraubeinheit in den Dübelzapfen auszudehnen, sodass die in den ersten Öffnungen des Kühlkörpers eingeschobenen Dübelzapfen kraftschlüssig mit dem Kühlkörper verbunden sind und die optische Baueinheit über das Adapter-Bauteil auf dem Tragerahmen montiert ist.

Ferner betrifft die Erfindung einen Kraftfahrzeugscheinwerfer mit zumindest einer erfindungsgemäßen Beleuchtungsvorrichtung.

Üblicherweise können eine oder mehrere Beleuchtungsvorrichtungen vorgesehen sein, die allein oder gemeinsam auf einem Tragerahmen montiert werden, welcher Tragerahmen anschließend in einem Kraftfahrzeugscheinwerfer eingebaut wird.

Um die Beleuchtungsvorrichtung mit dem Tragerahmen mechanisch zu verbinden, ist aus dem Stand der Technik bekannt, dass die Beleuchtungsvorrichtung mittels Schrauben, welche über den Tragerahmen in den Kühlkörper der Beleuchtungsvorrichtung eingeschraubt werden, montiert wird.

Üblicherweise sind Kühlkörper einer Beleuchtungsvorrichtung aus Metall bzw. Leichtmetall, beispielsweise Aluminium gefertigt. Um die Schrauben in den Kühlkörper einzuschrauben, werden unter anderem Bohrlöcher bzw. Bohrungen vorgebohrt, wobei metallischer Abrieb in Form von Metallspänen entsteht.

Eine solche Verschmutzung ist in einer Beleuchtungsvorrichtung bzw. in einem Kraftfahrzeugscheinwerfer unerwünscht, da solche Metallspäne beispielsweise zu Defekten von elektronischen Einrichtungen innerhalb des Scheinwerfers oder Ähnliches führen können.

Ferner sind an oben erwähnte Bohrungen hohe Toleranzanforderungen anzulegen, da Kraftfahrzeugscheinwerfer in einem Fahrzeug im Betrieb Vibrationen unterlegen sind, die dazu führen können, dass sich nicht fest verschraubte Schrauben wieder lösen können.

Hierzu zeigt die DE 10 2012 202933 A1 eine beispielhafte Beleuchtungsvorrichtung aus dem Stand der Technik.

Es ist eine Aufgabe der Erfindung eine verbesserte Beleuchtungsvorrichtung bereitzustellen.

Diese Aufgabe wird dadurch gelöst, dass die Dübelzapfen jeweils zumindest ein Rastelement umfassen, wobei das zumindest eine Rastelement eingerichtet ist, in einem dem Rastelement zugeordneten, in den ersten Öffnungen des Kühlkörpers vorgesehenen Gegenrastelement einzugreifen.

Dadurch wird ein unbeabsichtigtes Herausschieben der Dübelzapfen aus den ersten Öffnungen des Kühlkörpers verhindert bevor die Schraubeinheiten eingeschraubt sind.

Vorteilhafterweise weist der Kühlkörper genau drei erste Öffnungen auf.

Mit Vorteil kann vorgesehen sein, dass der Tragerahmen genau drei zweite Öffnungen aufweist.

Es kann günstig sein, wenn der Kühlkörper aus einem Metall, vorzugsweise Aluminium, hergestellt ist.

Es kann vorgesehen sein, dass das Adapter-Bauteil aus einem Kunststoff hergestellt ist.

Es kann vorgesehen sein, dass das Adapter-Bauteil einteilig bzw. einstückig ausgebildet ist.

Dadurch ist das Adapter-Bauteil leichter zu fertigen, beispielsweise mittels Spritzgießverfahren.

Es kann vorgesehen sein, dass das zumindest eine Rastelement als Rastnase oder als Hinterschnitt gebildet ist.

Es kann vorgesehen sein, dass das Gegenrastelement als Rastnase oder als Hinterschnitt gebildet ist.

Es kann vorgesehen sein, dass das Rastelement einstückig bzw. einteilig mit den Dübelzapfen hergestellt ist.

Vorteilhafterweise kann jeweils eine Schraubeinheit eine Schraube, welche das Gegengewinde und einen Schraubkopf aufweist, und ein Lagerungselement umfasst, wobei der Schraubkopf drehbar in dem Lagerungselement gelagert ist, und wobei das Lagerungselement in einer zweiten Öffnung des Tragerahmens angeordnet ist.

Das Lagerungselement kann hierbei fest oder drehbar in der zweiten Öffnung gelagert sein.

Mit Vorteil kann vorgesehen sein, dass die zweiten Öffnungen des Tragerahmens derart angeordnet sind, dass gedachte Verbindungslinien zwischen den zweiten Öffnungen des Tragerahmens ein rechtwinkeliges Dreieck bilden, vorzugsweise ein gleichschenkeliges rechtwinkeliges Dreieck.

Die so gedachten Verbindungslinien entsprechen in einem eingebauten Zustand der Beleuchtungsvorrichtung in einem Kraftfahrzeugscheinwerfer, welcher ordnungsgemäß in einem Kraftfahrzeug montiert ist, beispielsweise einer horizontalen und einer vertikalen Schwenkachse.

Die Begriffe "vertikal" und "horizontal" beziehen sich hierbei auf eine in einen Kraftfahrzeugscheinwerfer eingebaute Beleuchtungsvorrichtung, wobei der Kraftfahrzeugscheinwerfer ordnungsgemäß in einem Kraftfahrzeug eingebaut ist.

Es kann vorgesehen sein, dass die optische Baueinheit eingerichtet ist, einen Zusatzfernlichtspot vor die Beleuchtungsvorrichtung abzustrahlen.

Die Aufgabe wird auch gelöst durch einen Kraftfahrzeugscheinwerfer mit zumindest einer erfindungsgemäßen Beleuchtungsvorrichtung.

Nachfolgend wird die Erfindung anhand von beispielhaften Zeichnungen näher erläutert. Hierbei zeigt
Fig. 1 eine beispielhafte Beleuchtungsvorrichtung mit einer optischen Baueinheit, welche mittels einem Adapter-Bauteil auf einem Tragerahmen montiert ist;
Fig. 2 das Adapter-Bauteil aus Fig. 1 in einer perspektivischen Ansicht, wobei das Adapter-Bauteil drei Dübelzapfen umfasst;
Fig. 3 eine Detailansicht eines Dübelzapfens aus Fig. 2;
Fig. 4 eine Detail-Querschnittsansicht der Verbindungsstelle zwischen der optischen Baueinheit, dem Adapter-Bauteil und dem Tragerahmen, wobei ein Dübelzapfen in einer ersten Öffnung eines Kühlkörpers der optischen Baueinheit angeordnet ist und mittels Rastelementen mit der ersten Öffnung verrastet ist;
Fig. 5 eine weitere Detailansicht eines beispielhaften Dübelzapfens des Adapter-Bauteils ohne Rastelemente; und
Fig. 6 eine perspektivische Detailansicht der Verbindungsstelle eines mit der optischen Baueinheit verbundenen Dübelzapfens des Adapter-Bauteils.

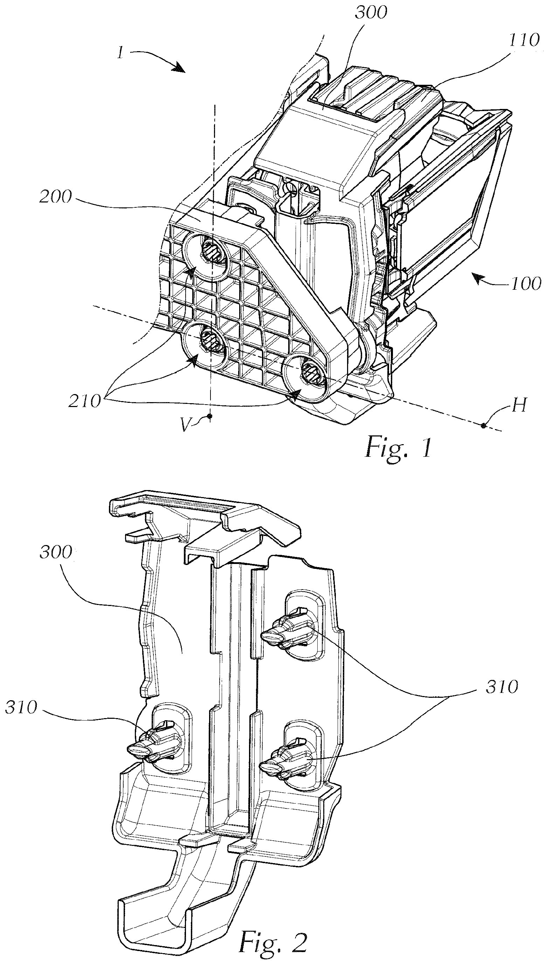

**Fig. 1** zeigt eine beispielhafte Beleuchtungsvorrichtung **1** für einen Kraftfahrzeugscheinwerfer, welche Beleuchtungsvorrichtung **1** eine optische Baueinheit **100** umfasst, welche zumindest eine Lichtquelle und einen der zumindest einen Lichtquelle zugeordneten Kühlkörper **110** umfasst, wobei der Kühlkörper **110** drei erste Öffnungen aufweist und beispielsweise aus Metall, insbesondere Aluminium hergestellt ist. Die optische Baueinheit **100** ist eingerichtet, ein Lichtbild vor einem Kraftfahrzeugscheinwerfer abzustrahlen.

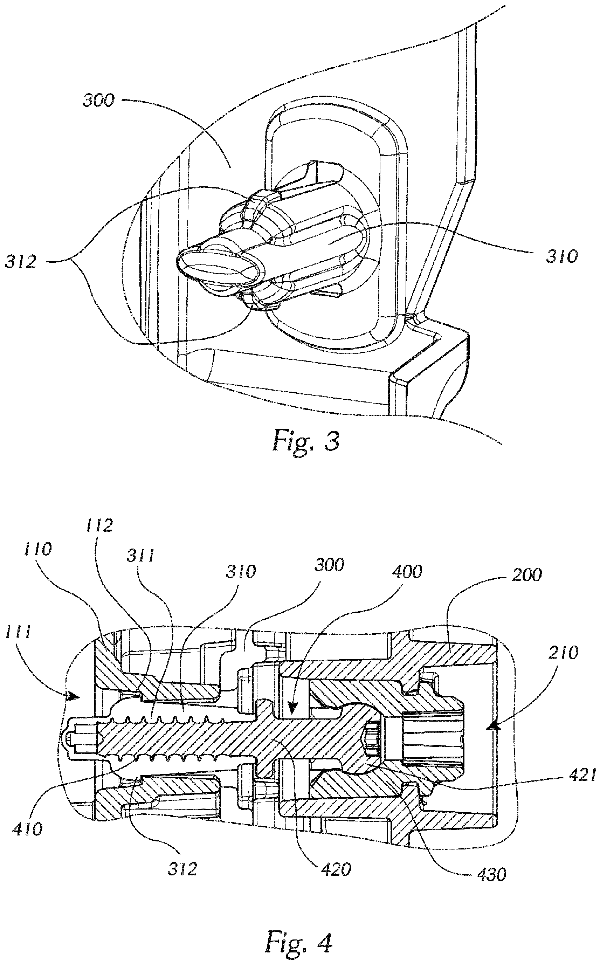

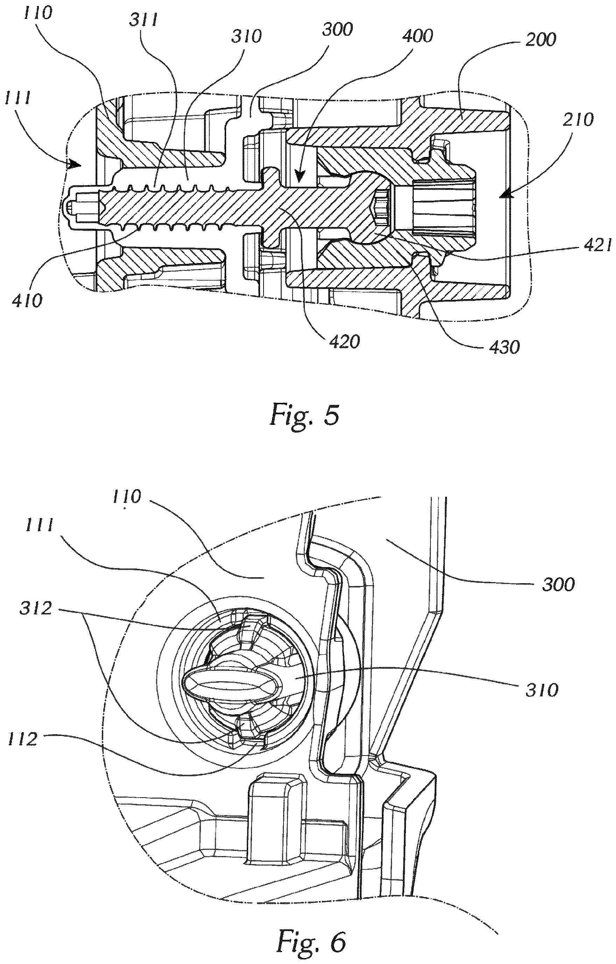

Die Beleuchtungsvorrichtung **1** umfasst ferner einen Tragerahmen **200,** welcher drei zweite Öffnungen **210** aufweist, welche zweiten Öffnungen **210** jeweils einer ersten Öffnung des Kühlkörpers zugeordnet sind, und ein Adapter-Bauteil **300,** welches eine der Anzahl der ersten Öffnungen des Kühlkörpers entsprechende Anzahl an zu den ersten Öffnungen korrespondierende Dübelzapfen **310** aufweist, welche in **Fig. 2****,** **3** **und** **6** sowie in einem Querschnitt in **Fig. 4** und **5** zu sehen sind. Das Adapter-Bauteil **300** ist in dem gezeigten Beispiel aus **Fig. 2** aus einem Kunststoff hergestellt und ist mit den Dübelzapfen **310** einstückig bzw. einteilig hergestellt, beispielsweise mittels Spritzgießverfahren.

**Fig. 3** zeigt eine Detailansicht eines Dübelzapfens **310** des Adapter-Bauteils **300,** wobei zu sehen ist, dass der Dübelzapfen zusätzlich zwei Rastelemente **312** aufweist.

In **Fig. 4** bzw. **Fig. 5****,** welche beispielhafte Ausführungsformen der Dübelzapfen darstellen, ist zu sehen, dass die Dübelzapfen **310** jeweils eine Gewindebohrung **311** aufweisen und jeweils in einer ersten Öffnung **111** des Kühlkörpers **110** eingeschoben sind, wobei für jeden Dübelzapfen **310** eine Schraubeinheit **400** mit einem mit der Gewindebohrung **311** korrespondierenden Gegengewinde **410** vorgesehen ist.

Die Schraubeinheit **400** umfasst hierbei eine Schraube **420,** welche das Gegengewinde **410** und einen Schraubkopf **421** aufweist, und ein Lagerungselement **430,** wobei der Schraubkopf **421** drehbar in dem Lagerungselement **430** gelagert ist. Das Lagerungselement **430** ist hierbei in einer zweiten Öffnung **210** des Tragerahmens **200** angeordnet.

Ferner durchsetzen die entsprechenden Schraubeinheiten **400** den Tragerahmen **200** über die zweiten Öffnungen **210** des Tragerahmens **200** und sind in den jeweiligen Dübelzapfen **310** zumindest teilweise eingeschraubt, wobei die Dübelzapfen **310** eingerichtet sind, sich beim Einschrauben einer Schraubeinheit **400** in den Dübelzapfen **310** bzw. des Gegengewindes **410** in die entsprechende Gewindebohrung **311** auszudehnen, sodass die in den ersten Öffnungen **111** des Kühlkörpers **110** eingeschobenen Dübelzapfen **310** kraftschlüssig mit dem Kühlkörper **110** verbunden sind und die optische Baueinheit **100** über das Adapter-Bauteil **300** auf dem Tragerahmen **200** montiert ist.

Hierbei wird das Adapter-Bauteil **300** beispielsweise auf den Kühlkörper **110** der optischen Baueinheit **100** aufgesetzt, wobei die Dübelzapfen **310** in die dafür vorgesehenen ersten Öffnungen **111** des Kühlkörpers **110** eingeschoben werden. In **Fig. 4****,** wie auch in **Fig. 3****,** ist weiters zu sehen, dass der Dübelzapfen **310** bzw. die Dübelzapfen **310** jeweils zumindest ein Rastelement **312** umfassen, welches als Rastnase ausgebildet ist, wobei das Rastelement **312** eingerichtet ist, in einem dem Rastelement **312** zugeordneten, in den ersten Öffnungen **111** des Kühlkörpers **110** vorgesehenen Gegenrastelement **112,** welches als Hinterschnitt ausgebildet ist, einzugreifen. Beim Einschieben der Dübelzapfen **310** in die ersten Öffnungen **111** verhindern die in die Gegenrastelemente **112** eingegriffenen Rastelemente **312** ein unbeabsichtigtes Herausschieben der Dübelzapfen **310** bevor die Schraubeinheiten **400** eingeschraubt sind.

Anschließend werden die Schraubeinheiten **400** bzw. die Schrauben **420,** welche sich in den zweiten Öffnungen **210** des Tragerahmens **200** befinden bzw. diesen durch diese zweiten Öffnungen **210** durchsetzen, in die entsprechenden Dübelzapfen **310** eingeschraubt. Dadurch wird die optische Baueinheit **100** mit dem Tragerahmen **200** verbunden, wobei die Ausrichtung der optischen Baueinheit **100** auf dem Tragerahmen **200** durch die eingeschraubte Tiefe der Schraubeinheiten **400** in den jeweiligen Dübelzapfen **310** bestimmt wird, d.h. je nach Einschraubtiefe in den verschiedenen Dübelzapfen **310** kann die optische Baueinheit **100** beispielsweise verkippt oder leicht gedreht werden.

**Fig. 6** zeigt hierzu die bespielhafte Verbindungsstelle aus Fig. 4 in einer perspektivischen Ansicht, wobei der in der ersten Öffnung **111** des Kühlkörpers **110** eingesetzte Dübelzapfen **310** mittels der Rastelemente **312** an den Hinterschnitten **112** der ersten Öffnung **111** verrastet ist.

Da der Schraubkopf **421** der Schraube **420** lediglich drehbar in dem Lagerungselement **430** gelagert ist und das Lagerungselement **430** selbst ebenfalls entweder fest oder zumindest drehbar in den zweiten Öffnungen **210** angeordnet ist, wird durch ein Ein- und/oder Hinausschrauben der Schrauben **420** in die Gewindebohrungen **311** die optische Baueinheit **100** bewegt. Der Tragerahmen ist hierbei relativ zur optischen Baueinheit **100** beispielsweise in einem Kraftfahrzeugscheinwerfer verbaut.

Die zweiten Öffnungen **210** des Tragerahmens **200** bzw. alle ersten und zweiten Öffnungen **111, 210** sind derart angeordnet, dass gedachte Verbindungslinien zwischen den zweiten Öffnungen **210** bzw. den ersten Öffnungen **111** ein rechtwinkeliges Dreieck bilden, vorzugsweise ein gleichschenkeliges rechtwinkeliges Dreieck. Die so gedachten Verbindungslinien entsprechen in einem eingebauten Zustand der Beleuchtungsvorrichtung in einem Kraftfahrzeugscheinwerfer, welcher ordnungsgemäß in einem Kraftfahrzeug montiert ist, beispielsweise einer horizontalen Schwenkachse **H** und einer vertikalen Schwenkachse **V,** welche in **Fig. 1** eingezeichnet sind.

Die Begriffe "vertikal" und "horizontal" beziehen sich hierbei auf eine in einen Kraftfahrzeugscheinwerfer eingebaute Beleuchtungsvorrichtung 1, wobei der Kraftfahrzeugscheinwerfer ordnungsgemäß in einem Kraftfahrzeug eingebaut ist.

### BEZUGSZEICHENLISTE

| | |
|---|---|
| Beleuchtungsvorrichtung | 1 |
| Optische Baueinheit | 100 |
| Kühlkörper | 110 |
| Erste Öffnung | 111 |
| Gegenrastelement | 112 |
| Tragerahmen | 200 |
| Zweite Öffnung | 210 |
| Adapter-Bauteil | 300 |
| Dübelzapfen | 310 |
| Gewindebohrung | 311 |
| Rastelement | 312 |
| Schraubeinheit | 400 |
| Gegengewinde | 410 |
| Schraube | 420 |
| Schraubkopf | 421 |
| Lagerungselement | 430 |

## Patentansprüche

1. Beleuchtungsvorrichtung (1) für einen Kraftfahrzeugscheinwerfer, welche Beleuchtungsvorrichtung (1) Folgendes umfasst:
- eine optische Baueinheit (100), welche zumindest eine Lichtquelle und einen der zumindest einen Lichtquelle zugeordneten Kühlkörper (110), welcher zumindest drei erste Öffnungen (111) aufweist, umfasst, wobei die optische Baueinheit (100) eingerichtet ist, ein Lichtbild vor den Kraftfahrzeugscheinwerfer abzustrahlen,
- einen Tragerahmen (200), welcher zumindest drei zweite Öffnungen (210) aufweist, welche den zumindest drei ersten Öffnungen (111) des Kühlkörpers (110) zugeordnet sind, und
- ein Adapter-Bauteil (300), welches eine der Anzahl der ersten Öffnungen (111) des Kühlkörpers (110) entsprechende Anzahl an zu den ersten Öffnungen (111) korrespondierende Dübelzapfen (310) aufweist, welche Dübelzapfen (310) jeweils eine Gewindebohrung (311) aufweisen und jeweils in einer ersten Öffnung (111) des Kühlkörpers (110) eingeschoben sind,
wobei für jeden Dübelzapfen (310) eine Schraubeinheit (400) mit einem mit der Gewindebohrung (311) korrespondierenden Gegengewinde (410) vorgesehen ist, welche Schraubeinheit (400) über eine zweite Öffnung (210) des Tragerahmens (200) den Tragerahmen (200) durchsetzt und in den jeweiligen Dübelzapfen (310) eingeschraubt ist, wobei die Dübelzapfen (310) eingerichtet sind, sich beim Einschrauben einer Schraubeinheit (400) in den Dübelzapfen (310) auszudehnen, sodass die in den ersten Öffnungen (111) des Kühlkörpers (110) eingeschobenen Dübelzapfen (310) kraftschlüssig mit dem Kühlkörper (110) verbunden sind und die optische Baueinheit (100) über das Adapter-Bauteil (300) auf dem Tragerahmen (200) montiert ist,
**dadurch gekennzeichnet, dass**
die Dübelzapfen (310) jeweils zumindest ein Rastelement (312) umfassen, wobei das zumindest eine Rastelement (312) eingerichtet ist, in einem dem Rastelement (312) zugeordneten, in den ersten Öffnungen (111) des Kühlkörpers (110) vorgesehenen Gegenrastelement (112) einzugreifen.

2. Beleuchtungsvorrichtung nach Anspruch 1, **dadurch gekennzeichnet, dass** der Kühlkörper (110) genau drei erste Öffnungen (111) aufweist.

3. Beleuchtungsvorrichtung nach Anspruch 1 oder 2, **dadurch gekennzeichnet, dass** der Tragerahmen (200) genau drei zweite Öffnungen (210) aufweist.

4. Beleuchtungsvorrichtung nach einem der Ansprüche 1 bis 3, **dadurch gekennzeichnet, dass** der Kühlkörper (110) aus einem Metall, vorzugsweise Aluminium, hergestellt ist.

5. Beleuchtungsvorrichtung nach einem der Ansprüche 1 bis 4, **dadurch gekennzeichnet, dass** das Adapter-Bauteil (300) aus einem Kunststoff hergestellt ist.

6. Beleuchtungsvorrichtung nach einem der Ansprüche 1 bis 5, **dadurch gekennzeichnet, dass** das Adapter-Bauteil (300) einteilig bzw. einstückig ausgebildet ist.

7. Beleuchtungsvorrichtung nach einem der Ansprüche 1 bis 6, **dadurch gekennzeichnet, dass** das zumindest eine Rastelement (312) als Rastnase oder als Hinterschnitt gebildet ist.

8. Beleuchtungsvorrichtung nach einem der Ansprüche 1 bis 7, **dadurch gekennzeichnet, dass** das Gegenrastelement (112) als Rastnase oder als Hinterschnitt gebildet ist.

9. Beleuchtungsvorrichtung nach einem der Ansprüche 1 bis 8, **dadurch gekennzeichnet, dass** das Rastelement (312) einstückig bzw. einteilig mit den Dübelzapfen (310) hergestellt ist.

10. Beleuchtungsvorrichtung nach einem der Ansprüche 1 bis 9, **dadurch gekennzeichnet, dass** jeweils eine Schraubeinheit (400) eine Schraube (420), welche das Gegengewinde (410) und einen Schraubkopf (421) aufweist, und ein Lagerungselement (430) umfasst, wobei der Schraubkopf (421) drehbar in dem Lagerungselement (430) gelagert ist, und wobei das Lagerungselement (430) in einer zweiten Öffnung (210) des Tragerahmens (200) angeordnet ist.

11. Beleuchtungsvorrichtung nach einem der Ansprüche 1 bis 10, **dadurch gekennzeichnet, dass** die zweiten Öffnungen (210) des Tragerahmens (200) derart angeordnet sind, dass gedachte Verbindungslinien zwischen den zweiten Öffnungen (210) des Tragerahmens (200) ein rechtwinkeliges Dreieck bilden, vorzugsweise ein gleichschenkeliges rechtwinkeliges Dreieck.

12. Beleuchtungsvorrichtung nach einem der Ansprüche 1 bis 11, **dadurch gekennzeichnet, dass** die optische Baueinheit (100) eingerichtet ist, einen Zusatzfernlichtspot vor die Beleuchtungsvorrichtung (1) abzustrahlen.

13. Kraftfahrzeugscheinwerfer mit zumindest einer Beleuchtungsvorrichtung (1) nach einem der Ansprüche 1 bis 12.

## Claims

1. Lighting device (1) for a motor vehicle headlamp, which lighting device (1) comprises the following
- an optical unit (100) which comprises at least one light source and a heat sink (110) which is assigned to the at least one light source and has at least three first openings (111), the optical unit (100) being set up to radiate a light image in front of the motor vehicle headlamp,
- a support frame (200), which has at least three second openings (210), which are assigned to the at least three first openings (111) of the heat sink (110), and
- an adapter component (300), which has a number of dowel pins (310) corresponding to the number of first openings (111) of the heat sink (110), which dowel pins (310) each have a threaded bore (311) and are each inserted into a first opening (111) of the heat sink (110),
wherein a screw unit (400) with a mating thread (410) corresponding to the threaded bore (311) is provided for each dowel pin (310), which screw unit (400) passes through the supporting frame (200) via a second opening (210) of the supporting frame (200) and is screwed into the respective dowel pin (310), wherein the dowel pins (310) are arranged to expand when a screw unit (400) is screwed into the dowel pin (310), so that the dowel pins (310) inserted into the first openings (111) of the heat sink (110) are non-positively connected to the heat sink (110) and the optical unit (100) is mounted on the support frame (200) via the adapter component (300),
**characterized in that**
the dowel pins (310) each comprise at least one latching element (312), the at least one latching element (312) being set up to engage in a mating latching element (112) assigned to the latching element (312) and provided in the first openings (111) of the heat sink (110).

2. Lighting device according to claim 1, **characterized in that** the heat sink (110) has exactly three first openings (111).

3. Lighting device according to claim 1 or 2, **characterized in that** the support frame (200) has exactly three second openings (210).

4. Lighting device according to one of claims 1 to 3, **characterized in that** the heat sink (110) is made of a metal, preferably aluminum.

5. Lighting device according to one of claims 1 to 4, **characterized in that** the adapter component (300) is made of a plastic material.

6. Lighting device according to one of claims 1 to 5, **characterized in that** the adapter component (300) is formed in one piece or in one piece.

7. Lighting device according to one of claims 1 to 6, **characterized in that** the at least one latching element (312) is formed as a latching lug or as an undercut.

8. Lighting device according to one of claims 1 to 7, **characterized in that** the mating latching element (112) is formed as a latching lug or as an undercut.

9. Lighting device according to one of claims 1 to 8, **characterized in that** the latching element (312) is manufactured in one piece or in one piece with the dowel pins (310).

10. Lighting device according to one of claims 1 to 9, **characterized in that** in each case a screw unit (400) comprises a screw (420), which has the mating thread (410) and a screw head (421), and a bearing element (430), wherein the screw head (421) is rotatably mounted in the bearing element (430), and wherein the bearing element (430) is arranged in a second opening (210) of the support frame (200).

11. Lighting device according to one of claims 1 to 10, **characterized in that** the second openings (210) of the support frame (200) are arranged in such a way that imaginary connecting lines between the second openings (210) of the support frame (200) form a right-angled triangle, preferably an isosceles right-angled triangle.

12. Lighting device according to one of claims 1 to 11, **characterized in that** the optical unit (100) is set up to emit an additional high beam spot in front of the lighting device (1).

13. Motor vehicle headlamp with at least one lighting device (1) according to one of claims 1 to 12.

## Revendications

1. Dispositif d'éclairage (1) pour un phare de véhicule automobile, lequel dispositif d'éclairage (1) comprend ce qui suit :
- une unité de construction optique (100), qui comprend au moins une source lumineuse et un corps de refroidissement (110) associé à la au moins une source lumineuse, lequel présente au moins trois premières ouvertures (111), l'unité de construction optique (100) étant conçue pour émettre une image lumineuse devant le projecteur de véhicule automobile,
- un cadre de support (200), qui présente au moins trois deuxièmes ouvertures (210), qui sont associées aux au moins trois premières ouvertures (111) du corps de refroidissement (110), et
- un composant adaptateur (300) qui présente un nombre de tourillons (310) correspondant au nombre des premières ouvertures (111) du corps de refroidissement (110), lesquels tourillons (310) présentent chacun un trou taraudé (311) et sont insérés chacun dans une première ouverture (111) du corps de refroidissement (110),
une unité de vissage (400) avec un contre-filetage (410) correspondant à l'alésage fileté (311) étant prévue pour chaque tourillon (310), laquelle unité de vissage (400) traverse le cadre de support (200) par une deuxième ouverture (210) du cadre de support (200) et est vissée dans le tourillon (310) respectif, les tourillons (310) étant aménagés, se dilater lors du vissage d'une unité de vissage (400) dans le tourillon de cheville (310), de sorte que les tourillons de cheville (310) insérés dans les premières ouvertures (111) du corps de refroidissement (110) sont reliés par adhérence au corps de refroidissement (110) et que l'unité de construction optique (100) est montée sur le cadre de support (200) par le biais du composant adaptateur (300),
**caractérisé en ce que**
les tourillons (310) comprennent chacun au moins un élément d'encliquetage (312), ledit au moins un élément d'encliquetage (312) étant agencé pour s'engager dans un contre-élément d'encliquetage (112) associé à l'élément d'encliquetage (312) et prévu dans les premières ouvertures (111) du corps de refroidissement (110).

2. Dispositif d'éclairage selon la revendication 1, **caractérisé en ce que** le corps de refroidissement (110) présente exactement trois premières ouvertures (111).

3. Dispositif d'éclairage selon la revendication 1 ou 2, **caractérisé en ce que** le cadre de support (200) présente exactement trois deuxièmes ouvertures (210).

4. Dispositif d'éclairage selon l'une des revendications 1 à 3, **caractérisé en ce que** le dissipateur thermique (110) est fabriqué en un métal, de préférence en aluminium.

5. Dispositif d'éclairage selon l'une des revendications 1 à 4, **caractérisé en ce que** le composant adaptateur (300) est réalisé en matière plastique.

6. Dispositif d'éclairage selon l'une des revendications 1 à 5, **caractérisé en ce que** le composant adaptateur (300) est réalisé d'une seule pièce ou d'un seul tenant.

7. Dispositif d'éclairage selon l'une des revendications 1 à 6, **caractérisé en ce que** l'au moins un élément d'encliquetage (312) est formé comme un ergot d'encliquetage ou comme une contre-dépouille.

8. Dispositif d'éclairage selon l'une des revendications 1 à 7, **caractérisé en ce que** le contre-élément d'encliquetage (112) est formé comme un ergot d'encliquetage ou comme une contre-dépouille.

9. Dispositif d'éclairage selon l'une quelconque des revendications 1 à 8, **caractérisé en ce que** l'élément d'encliquetage (312) est réalisé d'une seule pièce ou d'un seul tenant avec les tourillons (310) .

10. Dispositif d'éclairage selon l'une des revendications 1 à 9, **caractérisé en ce que** chaque unité de vis (400) comprend une vis (420), qui présente le filetage opposé (410) et une tête de vis (421), et un élément de palier (430), la tête de vis (421) étant logée de manière rotative dans l'élément de palier (430), et l'élément de palier (430) étant disposé dans une deuxième ouverture (210) du cadre de support (200).

11. Dispositif d'éclairage selon l'une des revendications 1 à 10, **caractérisé en ce que** les deuxièmes ouvertures (210) du cadre support (200) sont disposées de telle sorte que des lignes imaginaires de liaison entre les deuxièmes ouvertures (210) du cadre support (200) forment un triangle rectangle, de préférence un triangle rectangle isocèle.

12. Dispositif d'éclairage selon l'une quelconque des revendications 1 à 11, **caractérisé en ce que** le module optique (100) est agencé pour émettre un spot de feu de route supplémentaire devant le dispositif d'éclairage (1).

13. Projecteur de véhicule automobile comportant au moins un dispositif d'éclairage (1) selon l'une des revendications 1 à 12.
